# EUROPÄISCHE PATENTSCHRIFT

(11) **EP 1 133 407 B1**
(45) Veröffentlichungstag und Bekanntmachung des Hinweises auf die Patenterteilung: **01.10.2003**
(21) Anmeldenummer: 99953970.3
(22) Anmeldetag: 06.11.1999
(51) Int. Cl.: B60N 2/07, F16C 13/00, F16C 27/06

(54) **Fahrzeugsitzlagerung**
Vehicle Seat Mounting
Montage d'un siège de véhicule

(30) Priorität: 24.11.1998 DE 19854094
(43) Veröffentlichungstag der Anmeldung: 19.09.2001
(73) Patentinhaber: AUDI AG, 85045 Ingolstadt (DE)
(72) Erfinder: MEIER, Josef, D-85092 Kösching (DE); KIENZL, Georg, D-85055 Ingolstadt (DE)
(74) Vertreter: Engelhardt, Harald
(86) Internationale Anmeldenummer: EP9908508
(87) Internationale Veröffentlichungsnummer: WO00030888

(56) Entgegenhaltungen:
- EP-A- 0 462 739
- EP-A- 0 765 776
- WO-A-98/26190
- DE-C- 19 648 170
- GB-A- 2 035 471
- US-A- 4 012 085
- US-A- 4 213 400
- US-A- 4 229 055
- US-A- 4 362 341
- US-A- 4 423 667

## Beschreibung

Die Erfindung betrifft eine Fahrzeugsitzlagerung gemäß dem Oberbegriff des Patentanspruches 1.

Bereits 1976 wurde eine schwingungstechnische und arbeitsphysiologische Untersuchung von Fahrzeugsitzen veröffentlicht, bei der unter anderem auch die aus unterschiedlichen Fahrbahnverhältnissen resultierenden Karosserieschwingungen berücksichtigt wurden (näheres hierzu siehe ATZ Automobiltechnische Zeitschrift 76 (1974), Seite 216 ff.). Das gleiche Thema wird auch behandelt in der Veröffentlichung "Evaluation of ride comfort" (international journal of vehicle design, Vol. 15, 3/4/5, 1994, Seiten 318-325). Konkrete Konstruktionsvorschläge für die Anbindung von Sitzen an die Fahrzeugkarosserie können diesen wissenschaftlichen Untersuchungen jedoch nicht entnommen werden.

Aus der Patentliteratur sind konzeptionell höchst unterschiedliche Lösungen bekannt geworden, mit denen der negative Einfluß von Karosserieschwingungen auf den in einem Fahrzeugsitz befindlichen Insassen minimiert werden soll. So zeigt beispielsweise die DE 39 09 221-C2 (B60N 2/00) für einen Fahrzeugsitz einen relativ zu einem Sitzgestell beweglichen Polsterträger, der mittels Schwingungsdämpferelemente sozusagen schwimmend in dem Sitzgestell gehalten ist.

Die DE 296 22 262-U1 (B60N 2/02) zeigt eine lineare Führungsanordnung mit zwei ineinander greifenden U-Profilschienen, zwischen denen ein mikrozelliges PUR-elastomer mit Federungs- und Dämpfungseigenschaften eingespannt ist. Aufgrund der Relativbewegungen zwischen den U-Profilschienen ist hier mit einem erhöhten Verschleiß der Dämpfungselemente zu rechnen.

Die RU-2087343-C1 zeigt eine aufwendige Konstruktion für die Integration eines Dämpfungselementes zwischen Fahrzeugsitz und Fahrzeugboden.

Die DE 40 30 807-C2 (B60N 2/06) zeigt eine Sitzschiebeführung, bei der eine untere Schiene in die Aussparung eines Schall- und Schwingungsdämpfungselementes eingesetzt ist. Die dort gewählte Anordnung ist allerdings nicht geeignet, da am Karosserieboden erzeugte Schwingungen vom Sitzgestell fernzuhalten sind, da die einzelnen Bauelemente der Sitzschiebeführung einander stets berühren.

Aus der gattungsbildenden EP 0 765 776 A2 ist eine Fahrzeugsitzlagerung bekannt mit einer Führungsschiene und mit wenigstens einer in der Führungsschiene bewegbaren Rolle, welche aus einem an einem Gestell des Fahrzeugsitzes gelagerten Lagerring und einem in der Führungsschiene abrollenden Rollenkörper besteht. Hier besteht der einteilige Rollenkörper insgesamt einschließlich der umfangsseitigen Lauffläche aus einem schwingungsdämpfenden Material. Die Lauffläche ist stationär punktförmig belastet und weist einen relativ hohen Verschleiß mit relativ geringen Querführungseigenschaften auf. Zudem ist für eine gute Funktion eine Andruckrolle erforderlich

Aufgabe der Erfindung ist es, eine Fahrzeugsitzlagerung zu schaffen, mit der der negative Einfluß von Karosserieschwingungen auf den Sitzkomfort von Fahrzeugen mit einer möglichst einfachen, verschleißarmen Konstruktion weitestgehend minimierbar ist.

Diese Aufgabe wird mit den Merkmalen des Patentanspruchs 1 gelöst. Die Ansprüche 2 bis 11 betreffen besonders zweckmäßige Weiterbildungen des Gegenstands nach Anspruch 1.

Gemäß Anspruch 1 besteht der Rollenkörper aus einem in der Führungsschiene abrollenden Laufrad und einem Dämpfungselement, wobei sich der Lagerring und das Laufrad nicht berühren und das Laufrad und der Lagerring das Dämpfungselement einschließen. Damit ergibt sich ein dreiteiliger Aufbau der Rolle und zwar mit wenigstens einem in der Führungsschiene abrollendem, relativ verschleißfrei ausführbaren Laufrad, wenigstens einem am Sitzgestell gelagerten Lagerring, sowie einem zwischen diesen angeordneten Dämpfungselement. Das Laufrad und der Lagerring berühren sich einander nicht, so dass keinerlei Körperschall von der Karosserie auf das Sitzgestell des Fahrzeugsitzes übertragen werden kann. Der gesamte Fahrzeugsitz schwimmt jedoch mit guten Querführungseigenschaften in den beidseitig im Lagerring und dem Laufrad eingeschlossenen Dämpfungselementen der einzelnen Rollen.

Der besondere Vorteil der erfindungsgemäßen Lagerung ist darin zu sehen, daß mit einem prinzipiell identischen Aufbau für unterschiedliche Fahrzeugtypen jeweils eine optimale Entkopplung gewählt werden kann. Ausgehend von fahrzeugspezifischen Eigenfrequenzen und Schwingungsmaxima kann der Werkstoff des Dämpfungselementes und/oder die Geometrie wenigstens eines der Elemente Laufrad, Lagerring oder Dämpfungselement so verändert werden, daß jeweils fahrzeugspezifisch ein Optimum einstellbar ist, ohne daß an den Außenmassen der einzelnen Rollen Veränderungen vorgenommen werden müssen. Es können somit Rollen, die äußerlich baugleich sind, im Inneren jedoch ein anderes Dämpfungsverhalten zeigen, in standardisiert ausgeführte Führungsschienen eingesetzt werden, wobei das Dämpfungselement aus dem Werkstoff EPDM hergestellt sein kann.

Vorteilhaft ist auch die leichte Realisierbarkeit der Erfindung an bereits in Serie befindlichen Fahrzeugsitzlagerungen. Beispielsweise bei einer gemäß der EP-0765776-A2 ausgeführten Sitzlagerung lediglich der Rollenkörper auszuwechseln. Alle anderen Bauteile können unverändert bleiben. Damit können bereits auf dem Markt befindliche Fahrzeugsitzlagerungen gegebenenfalls auch mit einer erfindungsgemäßen Lagerung nachgerüstet werden. Hervorzuheben ist auch ein in der Rolle befindliches Stützelement gemäß den Ansprüchen 5-7. Dieses Stützelement ist so ausgelegt, daß die Relativbeweglichkeit zwischen dem Laufrad und dem Lagerring auf ein vorgegebenes Maß begrenzt ist, um so Überlastungen an dem Dämpfungselement zu vermeiden. Werden beispielsweise punktuell schlagartige Belastungen von der Fahrzeugkarosserie auf das Sitzgestell übertragen, entsteht kurzzeitig unter Überbrückung des Dämpfungselementes ein Festkörperkontakt zwischen Laufrad, Stützelement und Lagerring. Die Elastizität des Dämpfungselementes sorgt im Anschluß an die Schlagbelastung wieder dafür, daß der Festkörperkontakt aufgehoben ist und die gewünschte Kopplung so wieder hergestellt ist.

Die erfindungsgemäße Rolle kann mit konventionellen Vulkanisationstechniken erzeugt werden und ist damit in fertigungstechnischer Hinsicht unproblematisch.

Ein besonders vorteilhaftes Ausführungsbeispiel der Erfindung ist in der Zeichnung dargestellt. Es zeigt
- Figur 1:: in perspektivischer Ansicht einen Ausschnitt aus einer erfindungsgemäßen Lagerung,
- Figur 2:: für die in Figur 1 dargestellte Lagerung eine Schnittansicht und
- Figur 3:: eine Seitenansicht für eine in Figur 2 dargestellte Rolle

Alle Bauteile beziehungsweise Bauteilabschnitte weisen in sämtlichen Figuren die gleiche Bezifferung auf.

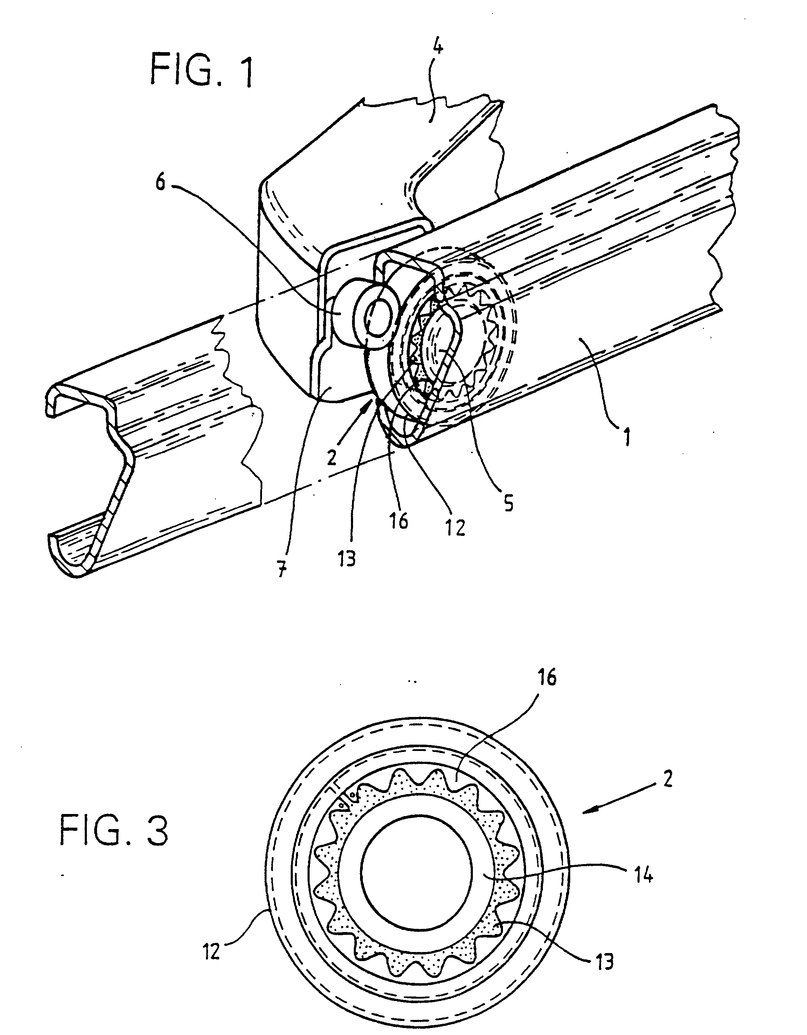

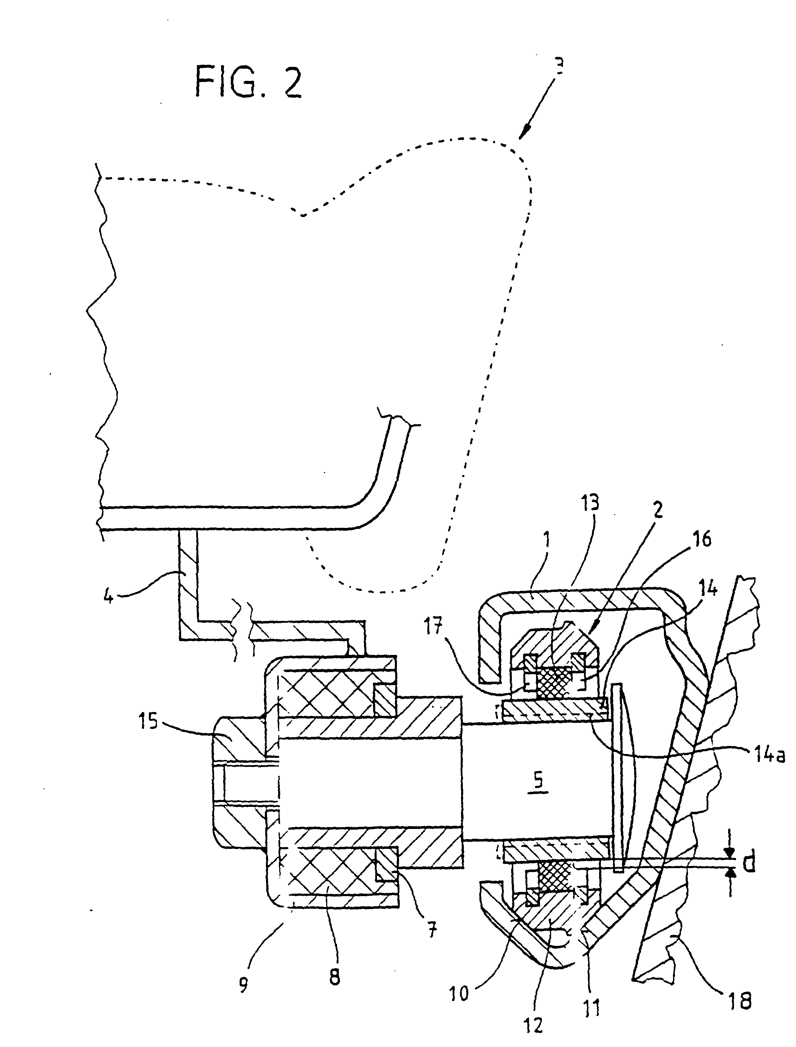

Man erkennt in Figur 1 eine Profilschiene 1, in der eine insgesamt mit 2 bezeichnete Rolle in Fahrzeuglängsrichtung hin- und herbewegbar ist. Der in Figur 1 gezeigte Ausschnitt zeigt von einem insgesamt vier Sitzfüße aufweisenden Fahrzeugsitz 3 (siehe Figur 2) einen Sitzfuß 4, an dem die Rolle 2 mittels eines Lagerzapfens 5 gehalten ist. Für einen einwandfreien Lauf der Rolle 2 in der Führungsschiene 1 sorgt eine Andruckrolle 6, die mittels eines Halterungsarmes 7 über ein Gummilager 8 in einer dem Sitzfuß 4 zugeordneten Lagerhülse 9 begrenzt drehbar gelagert ist (siehe hierzu ebenfalls Figur 2). In Verbindung mit dem Gummilager 8 ist also die Anordnung des Halterungsarmes 7 torsionselastisch, so daß die Andruckrolle 6 an der oberen Wandung der Führungsschiene 1 abgestützt ist und in Verbindung mit dieser einen Druck auf die Rolle 2 gegen Teillaufflächen 10,11 im unteren Bereich der Führungsschiene 1 ausübt.

Wesentliche Elemente der Rolle 2 sind hier ein Laufring 12, ein ringartiges Dämpfungselement 13, und ein Lagerring 14, der auf dem durch Verschraubung in einer Schweißmutter 15 drehfest angeordneten Zapfen 5 entweder direkt oder über eine Lagerbuchse 14a (mit Strichlinien angedeutet) drehbeweglich angeordnet ist. Von Bedeutung sind hier auch Stützelemente 16, 17, die hier nach Art eines Sprengringes in das Laufrad 13 eingepaßt sind und zum Lagerring 14 hin eine wellige Kontur aufweisen. Die Berge dieser wellenförmigen Kontur weisen zum Lagerring 14 einen vorgegebenen Abstand von beispielsweise d=1 mm auf. Bei einer für das Dämpfungselement gewählten Shore-Härte von 65 wird also ein Festkörperkontakt zwischen Laufrad 12 und Lagerring 14 erst bei einer Last von ca. 800 N erreicht. Derartige Belastungsspitzen kommen nur punktuell vor und sind nicht das Resultat des gewöhnlichen Fahrbetriebs an einem Fahrzeug. Um aber bei auftretenden Belastungsspitzen (beispielsweise nach einer schnellen Auffahrt auf Bordsteinen oder schneller Überfahrt von Straßenschwellen) keine allzu hohe Beanspruchung in das Dämpfungselement 13 einzuleiten, wird hier wirksam die relative Beweglichkeit zwischen Laufrad 12 und Lagerring 14 begrenzt.

Die Stützelemente 16 und 17 können ergänzend oder alternativ auch auf dem Lagerring 14 angeordnet sein und weisen dann ein Wellenprofil auf, das gegen das Laufrad 12 gerichtet ist. Wichtig in diesem Zusammenhang ist auch, daβ die Stützelemente 16 und 17 seitlichen Halt geben und damit bei Querbeschleunigungen beim Fahrzeug ein seitliches Wegschwimmen des gesamten Fahrzeugsitzes 3 über das Dämpfungselement 13 unterbinden.

Insbesondere aus Figur 3 ist ersichtlich, daß die Stützelement 16, 17 hier nach Art eines Sprengringes ausgeführt sind. Vorstellbar ist jedoch auch eine einstückige Anformung der Stützelementes 16, 17 in dem Laufrad 12 und/oder an dem Lagerring 14.

Besonders vorteilhafte Ergebnisse konnten in praktischen Versuchen für Rollen erzielt werden, die bei einem Gesamtaußendurchmesser von ca. 41,5 mm eine Aufteilung der Querschnittsflächen von Laufrad 12, Lagerring 14 und Dämpfungselement 13 in Verhältnis von A_{LF} : A_{LR} : A_{DE} = 1 : 1 bis 1,3 : 0,5 bis 0,8 aufweisen. Für das Laufrad 12 wurde als Werkstoff bevorzugt POM (Polyoxymethylen - beispielsweise Hostaform X341/3 oder dergleichen) oder faserverstärkter Polyester (beispielsweise PBT 15 GF) und für den Lagerring 14 bevorzugt Glyco-97 verzinnt oder Aluminium eingesetzt.

Insbesondere aus Figur 2 ist erkennbar, daß der Einsatz des Dämpfungselementes 13 in der Rolle 2 keine negativen Auswirkungen auf die Rollenqualität innerhalb der Führungsschiene 1 aufweist, weil die Andruckrolle 6 auch bei leichter Einfederung des Dämpfungselementes 13 stets dafür sorgt, daß die Rolle 2 gegen die Führungsschiene 1 gedrückt bleibt. Ein weiterer positiver Effekt der erfindungsgemäßen Rolle 2 besteht darin, daß bei der Längsverschiebung des Fahrzeugsitzes 3 innerhalb der Führungsschienen 1 gegenüber ein hier nur schematisch angedeuteten Karosserieboden 18 das Rollenlaufgeräusch leiser wird. Die gesamte Sitzlagerung wirkt dadurch hochwertiger.

## Patentansprüche

1. Fahrzeugsitzlagerung,
mit einer Führungsschiene (1),
mit wenigstens einer in der Führungsschiene (1) bewegbaren Rolle (2), welche aus einem an einem Gestell des Fahrzeugsitzes (3) gelagerten Lagerring (14) und einem in der Führungsschiene (1) abrollenden Rollenkörper besteht,
**dadurch gekennzeichnet,**
**dass** der Rollenkörper aus einem in der Führungsschiene (1) abrollenden Laufrad (12) und einem Dämpfungselement (13) besteht, dass sich der Lagerring (14) und das Laufrad (12) nicht berühren, und dass das Laufrad (12) und der Lagerring (14) das Dämpfungselement (13) einschließen.

2. Fahrzeugsitzlagerung gemäß Anspruch 1, **dadurch gekennzeichnet, dass** zwischen dem Laufrad (12) und dem Lagerring (14) als Dämpfungselement (13) ein gummielastischer Körper eingeformt ist.

3. Fahrzeugsitzlagerung nach Anspruch 2, **dadurch gekennzeichnet, dass** der Lagerring (14) und das Laufrad (12) jeweils einteilig ausgeführt sind.

4. Fahrzeugsitzlagerung nach Anspruch 2 oder 3, **dadurch gekennzeichnet, dass** das Dämpfungselement (13) als gummielastischer Körper zwischen dem Laufrad (12) und dem Lagerring (14) einvulkanisiert ist.

5. Fahrzeugsitzlagerung nach Anspruch 2, **dadurch gekennzeichnet, dass** in dem Laufrad (12) und/oder an dem Lagerring (14) ein die Relativbeweglichkeit zwischen Laufrad (12) und Lagerring (14) begrenzendes Stützelement (16, 17) gehalten ist.

6. Fahrzeugsitzlagerung nach Anspruch 5, **dadurch gekennzeichnet, dass** das Stützelement (16, 17) nach Art eines Sprengringes gebildet ist, der in der radialen Ebene zur Lagerung in dem Laufrad (12) beziehungsweise auf dem Lagerring (14) im wesentlichen eine Kreiskontur und zur Abstützung gegenüber dem Lagerring (14) beziehungsweise mit dem Laufrad (12) ein Wellenprofil aufweist.

7. Fahrzeugsitzlagerung nach Anspruch 6 , **dadurch gekennzeichnet, dass** das Stützelement (16,17) integraler Bestandteil des Laufrades (12) und/oder des Lagerringes (14) ist.

8. Fahrzeugsitzlagerung nach mindestens einem der Ansprüche 1-7, **dadurch gekennzeichnet, daß** für die Querschnitte des Laufringes (A_{LF}), des Lagerringes (A_{LR}) und des Dämpfungselementes (A_{DE}) als Flächenverhältnisse wählbar sind
A_{LF} : A_{LR} : A_{DE} = 1 : 1 bis 1,3 : 0,5 bis 0,8.

9. Fahrzeugsitzlagerung nach Anspruch 2, **dadurch gekennzeichnet, dass** als Werkstoff für das Dämpfungselement (13) EPDM mit einer Shore-Härte von 60 bis 80 gewählt ist.

10. Fahrzeugsitzlagerung nach Anspruch 2, **dadurch gekennzeichnet, dass** als Werkstoff für das Laufrad (12) Polyoxymethylen oder faserverstärkter Polyester gewählt ist.

11. Fahrzeugsitzlagerung nach Anspruch 2, **dadurch gekennzeichnet, dass** als Werkstoff für den Lagerring (14) Aluminium gewählt ist.

## Claims

1. A vehicle seat mounting,
comprising a guide rail (1),
comprising at least one roller (2) which can move in the guide rail (1) and which consists of a bearing ring (14) mounted on a frame of the vehicle seat (3) and of a rolling body which rolls in the guide rail (1),
**characterised in that**
the rolling body consists of a running wheel (12) which rolls in the guide rail (1), and of a damping element (13),
that the bearing ring (14) and the running wheel (12) do not contact each other, and that the running wheel (12) and the bearing ring (14) enclose the damping element (13).

2. A vehicle seat mounting according to claim 1, **characterised in that** a body with rubber-like elasticity is moulded-in as a damping element (13) between the running wheel (12) and the bearing ring (14).

3. A vehicle seat mounting according to claim 2, **characterised in that** the bearing ring (14) and the running wheel (12) are each of one-piece construction.

4. A vehicle seat mounting according to claim 2 or 3, **characterised in that** the damping element (13) is vulcanised-in as a body with rubber-like elasticity between the running wheel (12) and the bearing ring (14).

5. A vehicle seat mounting according to claim 2, **characterised in that** a supporting element (16, 17), which limits the capacity for relative movement between the running wheel (12) and the bearing ring (14), is held in the running wheel (12) and/or on the bearing ring (14).

6. A vehicle seat mounting according to claim 5, **characterised in that** the supporting element (16, 17) is formed in the manner of a retaining ring which has a substantially circular contour in the radial plane for mounting in the running wheel (12) or on the bearing ring (14), and which has a corrugated profile for support in relation to the bearing ring (14) or with the running wheel (12), respectively.

7. A vehicle seat mounting according to claim 6, **characterised in that** the supporting element (16, 17) is an integral component of the running wheel (12) and/or of the bearing ring (14).

8. A vehicle seat mounting according to at least one of claims 1-7, **characterised in that** ratios given by A_{LF}:A_{LR}:A_{DE} = 1 : 1 to 1.3 : 0.5 to 0.8 can be selected as the ratio of the cross-sectional area of the running ring (A_{LF}) to that of the bearing ring (A_{LR}) to that of the damping element (A_{DE}).

9. A vehicle seat mounting according to claim 2, **characterised in that** EPDM with a Shore hardness of 60 to 80 is selected as the material for the damping element (13).

10. A vehicle seat mounting according to claim 2, **characterised in that** polyoxymethylene or fibre-reinforced polyester is selected as the material for the running wheel (12).

11. A vehicle seat mounting according to claim 2, **characterised in that** aluminium is selected as the material for the bearing ring (14).

## Revendications

1. Dispositif de montage pour siège de véhicule,
avec une glissière de guidage (1),
avec au moins un galet (2) déplaçable dans la glissière de guidage (1) et formé d'une bague de palier (14) montée sur un bâti du siège-de-véhicule (3) et d'un corps de galet roulant dans la glissière de guidage (1),
**caractérisé en ce que**
le corps de galet est formé d'une roue mobile (12) roulant dans la glissière de guidage (1) et d'un élément d'amortissement (13), **en ce que** la bague de palier (14) et la roue mobile (12) ne sont pas en contact entre elles, et **en ce que** la roue mobile (12) et la bague de palier (14) enferment l'élément d'amortissement (13).

2. Dispositif de montage pour siège de véhicule selon la revendication 1, **caractérisé en ce qu'**entre la roue mobile (12) et la bague de palier (14) est formé un corps ayant l'élasticité du caoutchouc, servant d'élément d'amortissement (13).

3. Dispositif de montage pour siège de véhicule selon la revendication 2, **caractérisé en ce que** la bague de palier (14) et la roue mobile (12) sont chacune réalisées en une pièce.

4. Dispositif de montage pour siège de véhicule selon la revendication 2 ou 3, **caractérisé en ce que** l'élément d'amortissement (13), réalisé sous forme de corps ayant l'élasticité du caoutchouc, est vulcanisé dans le volume compris entre la roue mobile (12) et la bague de palier (14).

5. Dispositif de montage pour siège de véhicule selon la revendication 2, **caractérisé en ce que**, dans la roue mobile (12) et/ou sur la bague de palier (14), est maintenue un élément d'appui (16, 17), limitant la mobilité relative entre la roue mobile (12) et la bague de palier (14).

6. Dispositif de montage pour siège de véhicule selon la revendication 5, **caractérisé en ce que** l'élément d'appui (16, 17) est formé à la façon d'un anneau d'écartement ou circlip, qui présente, dans le plan radial de montage à rotation, dans la roue mobile (12) respectivement sur la bague de palier (14), pratiquement un contour circulaire et, pour assurer l'appui par rapport à la bague de palier (14), respectivement par rapport à la roue mobile (12), un profil ondulé.

7. Dispositif de montage pour siège de véhicule selon la revendication 6, **caractérisé en ce que** l'élément d'appui (16, 17) fait partie intégrante de la roue mobile (12) et/ou de la bague de palier (14).

8. Dispositif de montage pour siège de véhicule selon au moins l'une des revendications 1 à 7, **caractérisé en ce que**, pour les sections transversales de la bague mobile (A_{LF}), de la bague de palier (A_{LR}) et de l'élément d'amortissement (A_{DE}), on peut sélectionner en tant que rapport entre les surfaces
A_{LF} : A_{LR} : A_{DE} = 1 : 1 à 1,3 : 0,5 à 0,8.

9. Dispositif de montage pour siège de véhicule selon la revendication 2, **caractérisé en ce que** l'on choisit comme matériau pour l'élément d'amortissement (13) de l'EPDM ayant une dureté Shore de 60 à 80.

10. Dispositif de montage pour siège de véhicule selon la revendication 2, **caractérisé en ce que** l'on choisit comme matériau pour la roue mobile (12) du polyoxyméthylène ou du polyester renforcé par des fibres.

11. Dispositif de montage pour siège de véhicule selon la revendication 2, **caractérisé en ce qu'**on choisit comme matériau pour la bague de palier (14) de l'aluminium.
